# EUROPÄISCHE PATENTSCHRIFT

(11) **EP 3 587 711 B1**
(45) Veröffentlichungstag und Bekanntmachung des Hinweises auf die Patenterteilung: **04.05.2022**
(21) Anmeldenummer: 19160610.2
(22) Anmeldetag: 04.03.2019
(51) Int. Cl.: E05B 47/00, H01R 12/73, H01R 9/26, H01R 12/00, H02J 1/10, G06F 1/26, G07C 9/00

(54) **ELEKTRONIKEINHEIT FÜR EINE ELEKTRISCH SCHALTBARE ZUHALTEVORRICHTUNG**
ELECTRONIC UNIT FOR AN ELECTRICALLY ACTUATED CLOSING DEVICE
UNITÉ ÉLECTRONIQUE POUR UN DISPOSITIF DE MAINTIEN EN POSITION FERMÉE À COMMUTATION ÉLECTRIQUE

(30) Priorität: 25.06.2018 DE 102018210271
(43) Veröffentlichungstag der Anmeldung: 01.01.2020
(73) Patentinhaber: GEZE GmbH, 71229 Leonberg (DE)
(72) Erfinder: Benchokroun, Adnane, 75179 Pforzheim (DE)

(56) Entgegenhaltungen:
- DE-A1-102005 021 502
- DE-A1-102012 204 763
- US-A1- 2016 133 071

## Beschreibung

Die Erfindung betrifft eine Elektronikeinheit für eine elektrisch schaltbare Zuhaltevorrichtung der im Oberbegriff des Patentanspruchs 1 genannten Art.

Aus dem Stand der Technik sind Türanlagen mit mindestens einem Türflügel und einer elektrisch schaltbaren Zuhaltevorrichtung bekannt, welche als Türöffner eingesetzt ist. Eine solche elektrisch schaltbare Zuhaltevorrichtung umfasst in der Regel eine Auswerte- und Steuereinheit und einen elektrischen Antrieb, welcher von der Auswerte- und Steuereinheit angesteuert wird, sowie eine Energieversorgung zur Versorgung der Auswerte- und Steuereinheit und des elektrischen Antriebs, welcher beispielsweise als Spule oder Hubmagnet ausgeführt ist. Die meisten elektrisch schaltbaren Zuhaltevorrichtung werden festeingebaut und es besteht keine Möglichkeit zur Funktionserweiterung der korrespondierenden Elektronikeinheit bei kundenspezifischen Anforderungen. Daher müssen bei speziellen Erweiterungswünschen des Kunden bereits installierte elektrisch schaltbare Zuhaltevorrichtung mit der Elektronikeinheit komplett ausgetauscht werden.

Aus der EP 2 837 757 A2 ist eine Vorrichtung für eine Tür zur elektrischen Versorgung einer elektrischen Komponente bekannt, welche als elektrischer Türöffner ausgeführt ist. Der elektrische Türöffner kann durch eine Spannungsquelle zum Entriegeln und zum Verriegeln der Tür elektrisch betrieben werden, und ein Energiespeicher kann durch eine an der Spannungsquelle abgreifbare elektrische Spannung geladen werden. Bei einem Ausfall der elektrischen Spannung wird die elektrische Komponente durch den Energiespeicher elektrisch betrieben, wobei die Energie im Energiespeicher im Wesentlichen durch eine elektrostatische Energiespeicherung erfolgt. Der Energiespeicher weist mindestens eine Energiedichte von 1J/cm3 auf. Ein Abwärtswandler wandelt die elektrische Spannung in eine niedrigere Spannung um, durch welche der Energiespeicher aufgeladen werden kann. Durch einen Aufwärtsregler erfolgt eine Erhöhung der niedrigeren Spannung auf eine erste Ausgangsspannung. Hierbei entspricht die Höhe der ersten Ausgangsspannung der Höhe der an der Spannungsquelle abgreifbaren Eingangsspannung.

DE 102012204763 A1 betrifft ein modulares Sicherheitssystem. Das modulare Sicherheitssystem umfasst als erstes Modul in Basismodul, als zweites Modul ein erstes Erweiterungsmodul und als drittes Modul ein zweites Erweiterungsmodul. Das Basismodul umfasst einen Sicherheitseingang, einen Sicherheitsausgang, eine erste Verarbeitungseinheit, einen ersten Ausgang, einen ersten Eingang und einen zweiten Eingang. Das erste und zweite Erweiterungsmodul ist baugleich ausgebildet. Das erste Erweiterungsmodul umfasst zwei Sicherheitseingänge, einen dritten Eingang, einen vierten Eingang, einen fünften Eingang, einen zweiten Ausgang, einen dritten Ausgang, eine vierten Ausgang, und eine zweite Verarbeitungseinheit. Das zweite Erweiterungsmodul umfasst zwei Sicherheitseingänge, einen sechsten Eingang, einen siebten Eingang, einen achten Eingang, einen fünften Ausgang, einen sechsten Ausgang, eine siebten Ausgang und eine dritte Verarbeitungseinheit. Die Verbindung der einzelnen Module untereinander erfolgt durch eine Einzelverdrahtung. Es ist jedoch ebenso denkbar, dass die elektrische Verbindung der Module untereinander mittels eines Verbindungssteckers erfolgt.

Die US 2016/133071 A1 offenbart eine elektrische Verriegelung umfassend einen Verriegelungsmechanismus, einen mit dem Verriegelungsmechanismus gekoppelten und zum Verriegeln und Freigeben des Verriegelungsmechanismus konfigurierten Aktor und eine mit dem Aktor gekoppelte Steuerschaltung. Das elektrische Schloss weist eine Batterie auf, die elektrisch mit dem Aktor gekoppelt ist, einen Superkondensator, der elektrisch mit der Batterie gekoppelt ist und einen Prozessor, der mit dem Aktor, der Batterie und dem Superkondensator verbunden ist.

Der Erfindung liegt die Aufgabe zugrunde, eine Elektronikeinheit für eine elektrisch schaltbare Zuhaltevorrichtung anzugeben, welche an die Bedürfnisse des Kunden angepasst und einfach, kostengünstig und schnell erweitert werden kann.

Diese Aufgabe wird durch die Merkmale der Elektronikeinheit für eine elektrisch schaltbare Zuhaltevorrichtung nach Patentanspruch 1 gelöst.

Vorteilhafte Ausgestaltungen und Weiterbildungen der Erfindung sind in den übrigen Ansprüchen angegeben.

Um eine Elektronikeinheit für eine elektrisch schaltbare Zuhaltevorrichtung an die Bedürfnisse des Kunden anzupassen und einfach, kostengünstig und schnell zu erweitern, ist die Elektronikeinheit modular aufgebaut. Hierbei bilden eine Auswerte- und Steuereinheit und die Energieversorgung ein Grundmodul mit einem ersten Kontaktierbereich aus, welches mit mindestens einem Erweiterungsmodul mit einem zweiten Kontaktierbereich erweiterbar ist. Der erste Kontaktierbereich des Grundmoduls und der zweite Kontaktierbereich des mindestens einen Erweiterungsmoduls sind über einen Leiterplattenverbinder mechanisch und elektrisch miteinander verbindbar.

In vorteilhafter Weise erfolgt die mechanische und elektrische Verbindung der Module untereinander über Leiterplattenverbinder ohne Lötverbindungen. Die Leiterplattenverbinder können in einem einzigen Arbeitsgang auf die Kontaktierbereiche der Module aufgesteckt bzw. mit den Kontaktierbereichen verpresst werden. Zusätzliche Vorteil bieten die kostengünstige Herstellung der mechanischen und elektrischen Verbindungen bei geringem Platzbedarf und geringer Bauhöhe. Zudem sind die verbauten Module von außen nicht sichtbar.

Das Grundmodul ist sehr kompakt und kostengünstig konzipiert und stellt Grundfunktionen zur Ansteuerung und Energieversorgung der Auswerte- und Steuereinheit und des Antriebs zur Verfügung. Die Grundfunktionen des Grundmoduls können beispielsweise durch das mindestens eine Erweiterungsmodul leicht erweitert werden, so dass ein komplettes Austauschen bereits installierter elektrisch schaltbarer Zuhaltevorrichtungen bei Erweiterungswünschen verhindert werden kann. Die Module der Elektronikeinheit für eine elektrisch schaltbare Zuhaltevorrichtung können individuell zusammengestellt und an die Kundenbedürfnisse angepasst werden. Zudem ermöglicht die modulare Konzeption der Elektronikeinheit eine einfache Nachrüstung.

Das Grundmodul kann beispielsweise einen Brückengleichrichter und eine Glättungsschaltung als Teil der Energieversorgung umfassen, so dass die elektrisch schaltbare Zuhaltevorrichtung auch mit Wechselspannung betrieben werden kann, ohne dass störende Summtöne entstehen. Die Auswerte- und Steuereinheit kann beispielsweise einen Mikrokontroller oder einen ASIC-Baustein (ASIC: Anwendungsspezifische integrierte Schaltung) umfassen. Zudem kann die Auswerte- und Steuereinheit ein Schaltelement zur Ansteuerung des elektrischen Antriebs aufweisen. Hierbei kann der Mikrokontroller ein pulsweitenmoduliertes Ansteuersignal erzeugen, um den elektrischen Antrieb über das Schaltelement anzusteuern. Dadurch kann das Schaltelement in Abhängigkeit des pulsweitenmodulierten Ansteuersignals einen pulsweitenmodulierten Stromfluss durch den elektrischen Antrieb einstellen. Das Schaltelement kann beispielsweise als Feldeffekttransistor, vorzugsweise als N-Kanal-MOSFET ausgeführt werden. Zudem kann ein Positionssensor vorgesehen werden, welcher eine Ankerposition des elektrischen Antriebs ermittelt und an den Mikrokontroller zurückmeldet. Dadurch kann der Mikrokontroller die Pulsweitenmodulation beenden, wenn der Positionssensor erkennt, dass der Anker des elektrischen Antriebs angezogen ist. Zur elektrischen Versorgung der Auswerte- und Steuereinheit kann die Energieversorgung einen Abwärtswandler umfassen, welcher aus einer internen Gleichspannung des Gleichrichters eine niedrigere Versorgungsspannung erzeugt und an die Auswerte- und Steuereinheit ausgibt.

Erfindungsgemäß weist das mindestens eine Erweiterungsmodul einen dritten Kontaktierbereich auf, welcher über einen weiteren Leiterplattenverbinder mit dem zweiten Kontaktierbereich eines weiteren Erweiterungsmoduls mechanisch und elektrisch verbindbar ist, so dass das Grundmodul, das mindestens eine Erweiterungsmodul und mindestens ein zweites Erweiterungsmodul hintereinander anordenbar und elektrisch und mechanisch miteinander verbindbar sind. Dadurch können die Grundfunktionen des Grundmoduls mittels Hintereinanderschaltung von verschiedenen Erweiterungsmodulen ohne zusätzliche Hilfsmittel oder Kabel bei geringem Platzbedarf einfach durch Stecken oder Einpressen erweitert werden.

In weiterer vorteilhafter Ausgestaltung der Elektronikeinheit kann mindestens eine Erweiterungselektronik, welche eine steife Leiterplatte umfasst, über eine flexible Leiterfolie und einen Steckverbinder mit dem Grundmodul oder mit dem mindestens einen Erweiterungsmodul elektrisch verbunden werden. Dadurch können beispielsweise Informationen von weiteren Sensoren, wie beispielsweise Temperatursensor, Positionssensoren usw., welche an einem vorgegebenen Einbauort angeordnet werden, ausgewertet und bei der Ansteuerung des elektrischen Antriebs berücksichtigt werden. Die Ankopplung der steifen Leiterplatten der Erweiterungselektronik erfolgt über flexible Leiterfolien, welche im Rahmen einer definierten Biegebelastung im Gehäuse der elektrisch schaltbaren Zuhaltevorrichtung verlegt werden können, um die steifen Leiterplatten der einzelnen Erweiterungselektroniken an das Grundmodul bzw. das mindestens eine Erweiterungsmodul anzubinden. Die flexible Leiterfolie kann auf einer Seite mit Kontaktflächen ausgestattet werden und ein vorgegebenes Rastermaß aufweisen, wobei eine Aderanzahl je nach Art und Ausführung der Erweiterungselektronik variieren kann. Durch die Verwendung von kleinen starren Leiterplatten in Verbindung mit den flexiblen Leiterfolien können somit Verbindungspunkte zwischen den Modulen und den einzelnen Erweiterungselektroniken minimiert werden. Zudem können die einzelnen Erweiterungselektroniken leicht an den gewünschten Positionen angeordnet und beispielweise am Gehäuse der elektrisch schaltbaren Zuhaltevorrichtung befestigt werden. Zur Befestigung können entsprechende Befestigungselemente, Bohrungen bzw. Führungen vorgesehen werden.

In weiterer vorteilhafter Ausgestaltung der Elektronikeinheit kann die Auswerte- und Steuereinheit das verbundene mindestens eine Erweiterungsmodul und/oder die verbundene mindestens eine Erweiterungselektronik erkennen und aktivieren. In vorteilhafter Weise können die Grundfunktionen sowie die möglichen Erweiterungsfunktionen als Softwaremodule in der Auswerte- und Steuereinheit implementiert werden, wobei die implementierten Erweiterungsfunktionen bei einer Erkennung des korrespondierenden Erweiterungsmoduls und/oder der korrespondierenden Erweiterungselektronik aktiviert werden können. Dadurch muss bei der Erweiterung der Grundfunktionen des Grundmoduls kein Software-Update durchgeführt werden und das mindestens eine Erweiterungsmodul kann über Plug und Play gleich eingesetzt werden.

In weiterer vorteilhafter Ausgestaltung der Elektronikeinheit können die Kontaktierbereiche des Grundmoduls und des mindestens einen Erweiterungsmoduls jeweils mindestens eine Kontaktaufnahme aufweisen. Zudem können die Leiterplattenverbinder jeweils zwei Kontaktierbereiche aufweisen, welche jeweils mindestens einen Kontaktpin umfassen. Hierbei ist der mindestens eine Kontaktpin eines vierten Kontaktierbereichs elektrisch mit dem mindestens einen Kontaktpin eines fünften Kontaktbereichs verbunden. Das bedeutet, dass die paarweise verbundenen Kontaktpins der beiden Kontaktierbereiche einen Strompfad ausbilden, über welche die Kontaktaufnahmen der verschiedenen Module elektrisch miteinander verbunden werden können.

In weiterer vorteilhafter Ausgestaltung der Elektronikeinheit können die Kontaktaufnahmen des Grundmoduls und des mindestens einen Erweiterungsmoduls jeweils als Einpressöffnungen und die Kontaktpins des Leiterplattenverbinders können jeweils als Einpresskontakte ausgebildet werden. Hierbei kann zwischen den als Einpressöffnungen ausgeführten Kontaktaufnahmen und den als Einpresskontakte ausgebildeten Kontaktpins ein Einpressverbindungsbereich ausgebildet werden. Hierbei kann ein als Einpresskontakt ausgebildeter erster Kontaktpin des vierten Kontaktierbereichs in eine als Einpressöffnung ausgeführte erste Kontaktaufnahme des ersten Kontaktierbereichs eingepresst und elektrisch mit einem als Einpresskontakt ausgebildeten zweiten Kontaktpin des fünften Kontaktierbereichs verbunden werden, wobei der als Einpresskontakt ausgebildete zweite Kontaktpin des fünften Kontaktierbereichs in eine als Einpressöffnung ausgeführte zweite Kontaktaufnahme des zweiten Kontaktierbereichs eingepresst werden kann, so dass die erste Kontaktaufnahme des ersten Kontaktierbereichs elektrisch mit der zweiten Kontaktaufnahme des zweiten Kontaktierbereichs und eine Leiterplatte des Grundmoduls mechanisch mit einer Leiterplatte des mindestens einen Erweiterungsmoduls verbunden werden können.

In weiterer vorteilhafter Ausgestaltung der Elektronikeinheit kann das mindestens eine Erweiterungsmodul als Aufwärtswandler ausgebildet werden, welcher aus einer internen Gleichspannung eine höhere Versorgungsspannung für den elektrischen Antrieb erzeugt. Während der Vorlast muss der elektrische Antrieb mehr Kraft zum Entriegeln der Zuhaltevorrichtung aufbringen. Da aufgrund des beschränkten Bauraums keine größere Spulen oder Hubmagnete eingesetzt werden können, um unter Vorlast mehr Kraft zum Entriegeln der Zuhaltevorrichtung zur Verfügung stellen können, kann durch den Einsatz des Aufwärtswandlers die elektrisch schaltbare Zuhaltevorrichtung mit einem kleineren elektrischen Antrieb ohne Änderungen an der Mechanik oder am elektrischen Antrieb kurzzeitig eine höhere Kraft zum Entriegeln der Zuhaltevorrichtung erzeugen. Die durch den Aufwärtswandler erzeugte höhere Versorgungsspannung ermöglicht, dass der gleiche Antrieb kurzfristig eine höhere Leistung und somit einer größere Kraft zur Verfügung stellen kann. Die höhere Versorgungsspannung wird so vorgegeben, dass die kurzeitige höhere Leistung nicht zu einer Beschädigung des elektrischen Antriebs führt. Um nachfolgend eine Beschädigung des elektrischen Antriebs durch diese höhere Leistung zu vermeiden, kann der Stromfluss durch die Pulsweitenmodulation so eingestellt und/oder geregelt werden, dass eine Beschädigung des elektrischen Antriebs verhindert wird. Zudem kann mindestens ein Temperatursensor eine aktuelle Temperatur am elektrischen Antrieb erfassen und an die Auswerte- und Steuereinheit ausgeben. Die Auswerte- und Steuereinheit kann dann in Abhängigkeit von der erfassten Temperatur das pulsweitenmoduliertes Ansteuersignal erzeugen und an das Schaltelement ausgeben. Hierbei kann die Auswerte- und Steuereinheit die Pulsbreite des pulsweitenmodulierten Ansteuersignals zum Aktivierzugszeitpunkt auf einen maximalen Wert einstellen, so dass der elektrische Antrieb mit maximaler Leistung betrieben wird. Anschließend kann die Auswerte- und Steuereinheit die Pulsbreite des pulsweitenmodulierten Ansteuersignals in Abhängigkeit von der erfassten Temperatur über die Zeit regeln.

In weiterer vorteilhafter Ausgestaltung der Elektronikeinheit kann das mindestens eine Erweiterungsmodul als Busschnittstelle zur Vernetzung und Parametrisierung der elektrisch schaltbaren Zuhaltevorrichtung ausgeführt werden. Hierbei kann die Busschnittstelle beispielsweise als CAN Busschnittstelle mit Bluetooth Modul ausgebildet werden, welches eine Aktivierung des Antriebs über ein Fernsteuersignal ermöglicht. Zudem kann die Busschnittstelle als RS485 Busschnittstelle ausgebildet werden. Selbstverständlich kann die Grundfunktionalität des Grundmoduls auch mit einem als CAN Busschnittstelle mit Bluetooth Modul ausgebildeten ersten Erweiterungsmodul und mit einem als RS485 Busschnittstelle ausgebildeten zweiten Erweiterungsmodul erweitert werden. Solche Erweiterungsmodule bieten Kommunikationen über einen CAN Bus oder einen RS485 Bau und somit mehr Funktionalität für eine abgesetzte Bedienung und einen Fernzugriff mit tragbaren Computern bzw. Tablet-PCs oder Smartphones. Durch diese Erweiterungsoptionen bietet sich dem Benutzer eine größere Flexibilität in Bezug auf die Kommunikation mit der elektrisch schaltbaren Zuhaltevorrichtung.

In weiterer vorteilhafter Ausgestaltung der Elektronikeinheit kann die mindestens eine Erweiterungselektronik beispielsweise als Türzustandssensor, welcher den Öffnungszustand eines korrespondierenden Türflügels erkennen kann, oder als Riegelpositionssensor, welcher erkennen kann, ob sich ein Riegel der elektrisch schaltbaren Zuhaltevorrichtung in seinem verriegelten oder seinem entriegelten Zustand befindet, oder als Manipulationssensor ausgebildet werden, welcher eine Manipulation am Gehäuse der elektrisch schaltbaren Zuhaltevorrichtung erkennen kann.

In weiterer vorteilhafter Ausgestaltung der Elektronikeinheit kann die mindestens eine Erweiterungselektronik als Zeitgeber ausgebildet werden, welcher eine einstellbare Verzögerungszeitspanne zwischen einem Entriegelungswunsch und einer Ausgabe des Entriegelungssignals von der Auswerte- und Steuereinheit an den Antrieb vorgeben kann.

Nachfolgend werden Ausführungsbeispiele der Erfindung anhand von zeichnerischen Darstellungen näher erläutert. In den zeichnerischen Darstellungen bezeichnen gleiche Bezugszeichen Komponenten bzw. Elemente, die gleiche bzw. analoge Funktionen ausführen.

Dabei zeigt:
- Fig. 1: ein schematisches Blockdiagramm von Komponenten einer erfindungsgemäßen Elektronikeinheit für eine elektrisch schaltbare Zuhaltevorrichtung.
- Fig. 2: ein schematisches Blockdiagramm eines Ausführungsbeispiels einer erfindungsgemäßen Elektronikeinheit für eine elektrisch schaltbare Zuhaltevorrichtung.
- Fig. 3: ein schematisches Blockdiagramm eines weiteren Ausführungsbeispiels einer erfindungsgemäßen Elektronikeinheit für eine elektrisch schaltbare Zuhaltevorrichtung.
- Fig. 4: ein schematisches Blockdiagramm eines weiteren Ausführungsbeispiels einer erfindungsgemäßen Elektronikeinheit für eine elektrisch schaltbare Zuhaltevorrichtung.

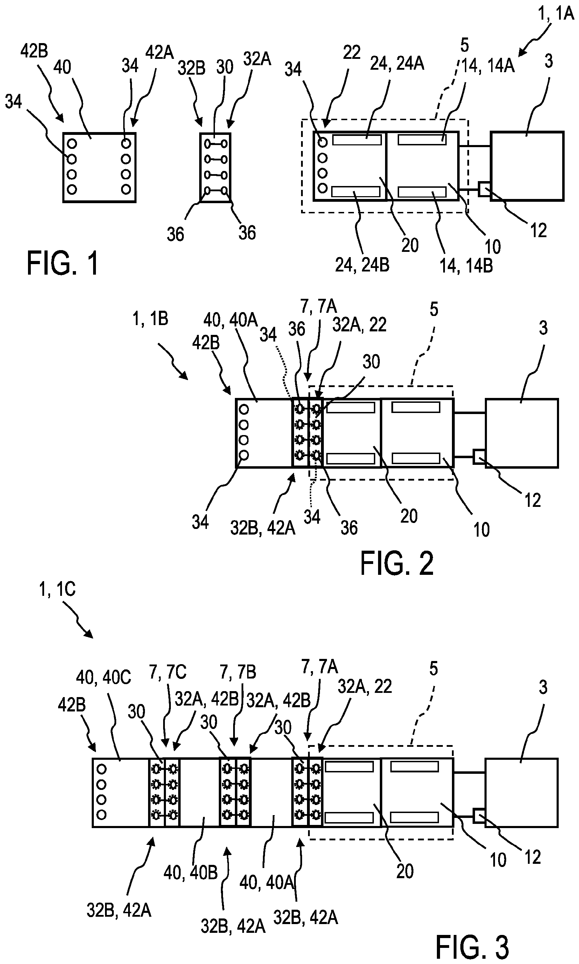

Wie aus Fig. 1 bis 4 ersichtlich ist, umfassen Ausführungsbeispiele der Elektronikeinheit 1, 1A, 1B, 1C, 1D für eine elektrisch schaltbare Zuhaltevorrichtung jeweils eine Energieversorgung 20 zur Versorgung einer Auswerte- und Steuereinheit 10 und eines elektrischen Antriebs 3 der elektrisch schaltbaren Zuhaltevorrichtung.

Erfindungsgemäß ist die Elektronikeinheit 1, 1A, 1B, 1C, 1D modular aufgebaut, wobei die Auswerte- und Steuereinheit 10 und die Energieversorgung 20 ein gestrichelt dargestelltes Grundmodul 5 mit einem ersten Kontaktierbereich 22 ausbilden, welches mit mindestens einem Erweiterungsmodul 40 mit einem zweiten Kontaktierbereich 42A erweiterbar ist. Hierbei sind der erste Kontaktierbereich 22 des Grundmoduls 5 und der zweite Kontaktierbereich 42A des mindestens einen Erweiterungsmoduls 40 über einen Leiterplattenverbinder 30 mechanisch und elektrisch miteinander verbindbar.

Wie aus Fig. 1 weiter ersichtlich ist, umfasst die Elektronikeinheit 1A im dargestellten Ausführungsbeispiel nur das Grundmodul 5, welches über den Leiterplattenverbinder 30 mechanisch und elektrisch mit einem Erweiterungsmodul 40 verbunden werden kann.

Die Energieversorgung 20 umfasst im dargestellten Ausführungsbeispiel einen nicht näher dargestellten Brückengleichrichter und eine Glättungsschaltung und stellt eine interne Gleichspannung zur Versorgung der Auswerte- und Steuereinheit 10, der verbundenen Erweiterungsmodule 40 und des elektrischen Antriebs 3 zur Verfügung. Der elektrische Antrieb ist im dargestellten Ausführungsbeispiel als Magnetspule mit einem beweglichen Anker ausgeführt. Die Auswerte- und Steuereinheit 10 umfasst im dargestellten Ausführungsbeispiele einen nicht näher dargestellten Mikrokontroller und ein nicht näher dargestelltes Schaltelement zur Ansteuerung des elektrischen Antriebs 3. Das Schaltelement ist im dargestellten Ausführungsbeispiel als N-Kanal-MOSFET ausgeführt. Der Mikrokontroller erzeugt ein pulsweitenmoduliertes Ansteuersignal, um den elektrischen Antrieb 3 über das Schaltelement anzusteuern. Dadurch kann das Schaltelement in Abhängigkeit des pulsweitenmodulierten Ansteuersignals einen pulsweitenmodulierten Stromfluss durch den elektrischen Antrieb 3 einstellen. Zudem ist ein Positionssensor 12 im Bereich des Antriebs 3 angeordnet, welcher eine Ankerposition des elektrischen Antriebs 3 ermittelt und an den Mikrokontroller zurückmeldet. Dadurch kann der Mikrokontroller die Pulsweitenmodulation beenden, wenn der Positionssensor 12 erkennt, dass der Anker des elektrischen Antriebs 3 angezogen ist. Zur elektrischen Versorgung der Auswerte- und Steuereinheit 10 umfasst die Energieversorgung 20 einen nicht dargestellten Abwärtswandler, welcher aus der internen Gleichspannung des Gleichrichters eine niedrigere Versorgungsspannung erzeugt und an die Auswerte- und Steuereinheit 10 ausgibt.

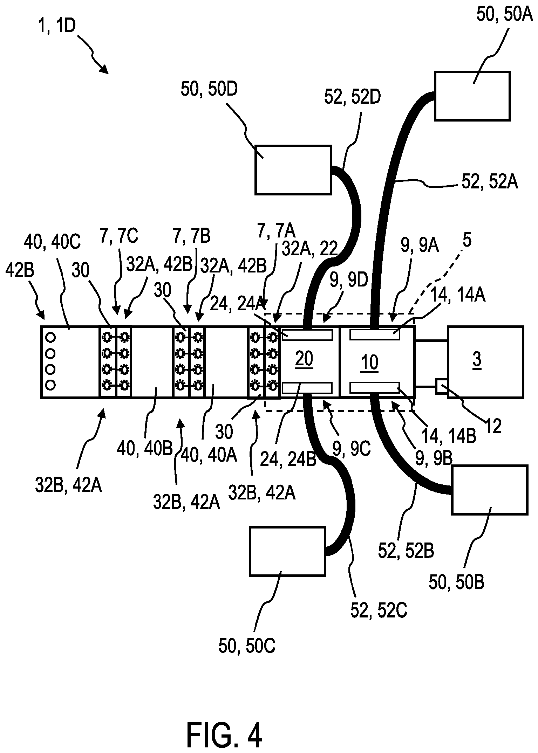

Wie aus Fig. 1 bis 4 weiter ersichtlich ist, weisen die Erweiterungsmodule 40 in den dargestellten Ausführungsbeispielen jeweils einen dritten Kontaktierbereich 42B auf, welcher über einen weiteren Leiterplattenverbinder 30 mit dem zweiten Kontaktierbereich 42A eines weiteren Erweiterungsmoduls 40 mechanisch und elektrisch verbindbar ist. Wie aus Fig. 3 und 4 weiter ersichtlich ist, können dadurch das Grundmodul 5 und mehrere Erweiterungsmodule 40 hintereinander angeordnet und elektrisch und mechanisch miteinander verbunden werden.

Die Kontaktierbereiche 22, 42A, 42B des Grundmoduls 5 und der Erweiterungsmodule 40 weisen in den dargestellten Ausführungsbeispielen jeweils vier Kontaktaufnahmen 34 auf. Der Leiterplattenverbinder 30 weist zwei Kontaktierbereiche 32A, 32B auf, welche in den dargestellten Ausführungsbeispielen jeweils vier Kontaktpins 36 umfassen. Hierbei ist jeweils ein Kontaktpin 36 eines vierten Kontaktierbereichs 32A elektrisch mit einem Kontaktpin 36 eines fünften Kontaktbereichs 32B verbunden. Zudem sind die Kontaktaufnahmen 34 des Grundmoduls 5 und der Erweiterungsmodule 40 jeweils als Einpressöffnungen ausgeführt. Die Kontaktpins 36 des Leiterplattenverbinders 30 sind jeweils als Einpresskontakte ausgebildet. Dadurch kann zwischen den als Einpressöffnungen ausgeführten Kontaktaufnahmen 34 und den als Einpresskontakte ausgebildeten Kontaktpins 36 ein Einpressverbindungsbereich 7 ausgebildet werden. In vorteilhafter Weise weist der Leiterplattenverbinder 30 im verbauten Zustand nur eine geringe Höhe im Bereich zwischen 1,5mm und 4mm auf.

Wie aus Fig. 2 weiter ersichtlich ist, ist das Grundmodul 5 im dargestellten Ausführungsbeispiel der Elektronikeinheit 1B über den Leiterplattenverbinder 30 an einem ersten Einpressverbindungsbereich 7A mechanisch und elektrisch mit einem ersten Erweiterungsmodul 40 verbunden, welches als Aufwärtswandler 40A ausgebildet ist. Der Aufwärtswandler 40A erzeugt aus der internen Gleichspannung eine höhere Versorgungsspannung für den elektrischen Antrieb 3. Wie aus Fig. 2 weiter ersichtlich ist, sind die als Einpresskontakte ausgebildeten vier Kontaktpins 36 des vierten Kontaktierbereichs 32A jeweils in eine als Einpressöffnung ausgeführte erste Kontaktaufnahme 34 des ersten Kontaktierbereichs 22 eingepresst und elektrisch mit den als Einpresskontakte ausgebildeten vier Kontaktpins 36 des fünften Kontaktierbereichs 32B verbunden, wobei die als Einpresskontakte ausgebildeten vier Kontaktpins 36 des fünften Kontaktierbereichs 32B jeweils in eine als Einpressöffnung ausgeführte Kontaktaufnahme 34 des zweiten Kontaktierbereichs 42A eingepresst sind. Durch den ersten Einpressverbindungsbereich 7A sind die vier Kontaktaufnahmen 34 des ersten Kontaktierbereichs 22 elektrisch mit jeweils einer der Kontaktaufnahmen 34 des zweiten Kontaktierbereichs 42A verbunden. Zudem ist eine Leiterplatte des Grundmoduls 5 durch den ersten Einpressbereich 7A mechanisch mit einer Leiterplatte des als Aufwärtswandler 40A ausgeführten ersten Erweiterungsmoduls 40 verbunden.

Wie aus Fig. 3 weiter ersichtlich ist, ist das Grundmodul 5 im dargestellten Ausführungsbeispiel der Elektronikeinheit 1C über einen ersten Leiterplattenverbinder 30 an einem ersten Einpressverbindungsbereich 7A mechanisch und elektrisch mit einem ersten Erweiterungsmodul 40 verbunden, welches als Aufwärtswandler 40A ausgebildet ist. Das als Aufwärtswandler 40A ausgeführte erste Erweiterungsmodul 40 ist über einen zweiten Leiterplattenverbinder 30 an einem zweiten Einpressverbindungsbereich 7B mechanisch und elektrisch mit einem zweiten Erweiterungsmodul 40 verbunden, welches als CAN Busschnittstelle 40B mit Bluetooth Modul ausgebildet ist. Das als CAN Busschnittstelle 40B mit Bluetooth Modul ausgeführte zweite Erweiterungsmodul 40 ist über einen dritten Leiterplattenverbinder 30 an einem dritten Einpressverbindungsbereich 7C mechanisch und elektrisch mit einem dritten Erweiterungsmodul 40 verbunden, welches als RS485 Busschnittstelle ausgebildet ist. Durch die als Busschnittstellen 40B, 40C ausgeführten Erweiterungsmodule 40 ist eine Vernetzung und Parametrisierung der elektrisch schaltbaren Zuhaltevorrichtung möglich. Ausbildung und Funktionsweise der Einpressverbindungsbereiche 7B und 7C entspricht der Ausbildung und Funktionsweise des oben beschriebenen ersten Einpressverbindungsbereichs 7A, so dass hier auf eine wiederholende Beschreibung verzichtet wird.

Wie aus Fig. 1 bis 4 weiter ersichtlich ist, umfasst das Grundmodul 5 in den dargestellten Ausführungsbeispielen mehrere Steckverbinder 14, 24. Über diese Steckverbinder 14, 24 kann mindestens eine Erweiterungselektronik 50, welche eine steife Leiterplatte umfasst, über eine flexible Leiterfolie 52 mit dem Grundmodul 5 verbunden werden. Zudem kann auch das mindestens eine Erweiterungsmodul 20 einen solchen Steckverbinder 14, 24 umfassen, über welchen eine solche Erweiterungselektronik 50 elektrisch mit dem mindestens einen Erweiterungsmodul 20 verbunden werden kann.

Wie aus Fig. 4 weiter ersichtlich ist, ist das Grundmodul 5 im dargestellten Ausführungsbeispiel der Elektronikeinheit 10 analog zum dem in Fig. 3 dargestellten Ausführungsbeispiel der Elektronikeinheit 1C über einen ersten Leiterplattenverbinder 30 an einem ersten Einpressverbindungsbereich 7A mechanisch und elektrisch mit einem ersten Erweiterungsmodul 40 verbunden, welches als Aufwärtswandler 40A ausgebildet ist. Das als Aufwärtswandler 40A ausgeführte erste Erweiterungsmodul 40 ist über einen zweiten Leiterplattenverbinder 30 an einem zweiten Einpressverbindungsbereich 7B mechanisch und elektrisch mit einem zweiten Erweiterungsmodul 40 verbunden, welches als CAN Busschnittstelle 40B mit Bluetooth Modul ausgebildet ist. Das als CAN Busschnittstelle 40B mit Bluetooth Modul ausgeführte zweite Erweiterungsmodul ist über einen dritten Leiterplattenverbinder 30 an einem dritten Einpressverbindungsbereich 7C mechanisch und elektrisch mit einem dritten Erweiterungsmodul 40 verbunden, welches als RS485 Busschnittstelle ausgebildet ist.

Zudem ist das Grundmodul 5 im dargestellten Ausführungsbeispiel der Elektronikeinheit 1D über vier Steckverbinder 14, 24 und vier flexible Leiterfolien 52 mit vier Erweiterungselektroniken 50 verbunden, welche jeweils eine steife Leiterplatte umfassen. Hierbei ist das Grundmodul 5 über einen im Bereich der Auswerte- und Steuereinheit 10 angeordneten ersten Steckerverbinder 14A und eine erste flexible Leiterfolie 52A elektrisch mit einer ersten Erweiterungselektronik 50 verbunden, welche als Türzustandssensor 50A ausgeführt ist. Der Türzustandssensor 50A erkennt den Öffnungszustand eines korrespondierenden Türflügels und überträgt den erkannten Öffnungszustand an die Auswerte- und Steuereinheit 10 zur weiteren Verarbeitung. Die als Türzustandssensor 50A ausgeführte erste Erweiterungselektronik 50 ist über entsprechende Befestigungselemente, Bohrungen bzw. Führungen am nicht dargestellten Gehäuse der elektrisch schaltbaren Zuhaltevorrichtung befestigt. Zudem ist das Grundmodul 5 über einen im Bereich der Auswerte- und Steuereinheit 10 angeordneten zweiten Steckerverbinder 14B und eine zweite flexible Leiterfolie 52B elektrisch mit einer zweiten Erweiterungselektronik 50 verbunden, welche als Riegelpositionssensor 50B ausgeführt ist. Der Riegelpositionssensor 50B erkennt ob sich ein Riegel der elektrisch schaltbaren Zuhaltevorrichtung in seinem verriegelten oder seinem entriegelten Zustand befindet und überträgt den erkannten Zustand an die Auswerte- und Steuereinheit 10 zur weiteren Verarbeitung. Die als Riegelpositionssensor 50B ausgeführte zweite Erweiterungselektronik 50 ist über entsprechende Befestigungselemente, Bohrungen bzw. Führungen am nicht dargestellten Gehäuse der elektrisch schaltbaren Zuhaltevorrichtung befestigt. Des Weiteren ist das Grundmodul 5 über einen im Bereich der Energieversorgung 20 angeordneten dritten Steckerverbinder 24A und eine dritte flexible Leiterfolie 52C elektrisch mit einer dritten Erweiterungselektronik 50 verbunden, welche als Manipulationssensor 50C ausgeführt ist. Der Manipulationssensor 50C erkennt eine Manipulation bzw. einen Manipulationsversuch am Gehäuse der elektrisch schaltbaren Zuhaltevorrichtung und überträgt die erkannte Manipulation an die Auswerte- und Steuereinheit 10 zur weiteren Verarbeitung. So kann die Auswerte- und Steuereinheit 10 bei einer erkannten Manipulation beispielsweise ein entsprechendes akustisches und/oder optisches Warnsignal ausgeben. Die als Manipulationssensor 50C ausgeführte dritte Erweiterungselektronik 50 ist über entsprechende Befestigungselemente, Bohrungen bzw. Führungen am nicht dargestellten Gehäuse der elektrisch schaltbaren Zuhaltevorrichtung befestigt. Außerdem ist das Grundmodul 5 über einen im Bereich der Energieversorgung 20 angeordneten vierten Steckerverbinder 24B und eine vierte flexible Leiterfolie 52D elektrisch mit einer vierten Erweiterungselektronik 50 verbunden, welche als Zeitgeber 50D ausgeführt ist. Der Zeitgeber 50D gibt eine einstellbare Verzögerungszeitspanne zwischen einem Entriegelungswunsch und einer Ausgabe des Entriegelungssignals von der Auswerte- und Steuereinheit 10 an den elektrischen Antrieb 3 vor. Die als Zeitgeber 50D ausgeführte vierte Erweiterungselektronik 50 ist über entsprechende Befestigungselemente, Bohrungen bzw. Führungen am nicht dargestellten Gehäuse der elektrisch schaltbaren Zuhaltevorrichtung befestigt.

Bei den dargestellten Ausführungsbeispielen erkennt und aktiviert die Auswerte- und Steuereinheit 10 die verbundenen Erweiterungsmodule 40 und die verbundenen Erweiterungselektroniken 50 nach Art eines Plug und Play Verfahrens.

Ausführungsformen der erfindungsgemäßen Elektronikeinheit für eine elektrisch schaltbare Zuhaltevorrichtung können durch den modularen Aufbau individuell nach Kundenbedürfnissen zusammengestellt werden. Zudem ist durch das Verkettungskonzept und die Einpresstechnik eine einfache mechanische und elektrische Verbindung zwischen den einzelnen Modulen möglich. Dies ermöglicht eine einfache Erweiterung von bereits verbauten Elektronikeinheiten mit weiteren Erweiterungsmodulen ohne Löten.

Ausführungsformen der erfindungsgemäßen Elektronikeinheit werden in elektrisch schaltbaren Zuhaltevorrichtungen eingesetzt, welche vorzugsweise als Türöffner in einer Türanlage mit mindestens einem Türflügel verwendet werden.

### Bezugszeichenliste

- 1, 1A, 1B, 1C, 1D: Elektronikeinheit für eine elektrisch schaltbare Zuhaltevorrichtung
- 3: Antrieb
- 5: Grundmodul
- 7, 7A, 7B, 7C: Einpressverbindungsbereich
- 9, 9A, 9B, 9C, 9D: Steckverbindung
- 10: Auswerte- und Steuereinheit
- 12: Positionssensor
- 14, 14A, 14B: Steckerverbinder
- 20: Energieversorgung
- 22: Kontaktierbereich
- 30: Leiterplattenverbinder
- 32A, 32B: Kontaktierbereich
- 34: Kontaktaufnahme
- 36: Kontaktpin
- 40: Erweiterungsmodul
- 40A: Aufwärtswandler
- 40B: CAN Busschnittstelle mit Bluetooth Zusatzmodul
- 40C: RS485 Busschnittstelle
- 42A, 42B: Kontaktierbereich
- 50: Erweiterungselektronik
- 50A: Türzustandssensor
- 50B: Riegelpositionssensor
- 50C: Manipulationssensor
- 50D: Zeitgeber
- 52, 52A, 52B, 52C, 52D: flexible Leiterbahnfolie

## Patentansprüche

1. Elektronikeinheit (1) für eine elektrisch schaltbare Zuhaltevorrichtung, mit einer Auswerte- und Steuereinheit (10) und einer Energieversorgung (20) zur Versorgung der Auswerte- und Steuereinheit (10) und eines elektrischen Antriebs (3) der elektrisch schaltbaren Zuhaltevorrichtung, wobei die Elektronikeinheit (1) modular aufgebaut ist und ein Grundmodul (5) sowie mindestens ein Erweiterungsmodul (40) umfasst,
**dadurch gekennzeichnet,**
**dass** die Auswerte- und Steuereinheit (10) und die Energieversorgung (20) das Grundmodul (5) mit einem ersten Kontaktierbereich (22) ausbilden, welches mit dem mindestens einen Erweiterungsmodul (40) mit einem zweiten Kontaktierbereich (42A) erweiterbar ist, wobei der erste Kontaktierbereich (22) des Grundmoduls (5) und der zweite Kontaktierbereich (42A) des mindestens einen Erweiterungsmoduls (40) über einen Leiterplattenverbinder (30) mechanisch und elektrisch miteinander verbunden sind, und wobei das mindestens eine Erweiterungsmodul (40) einen dritten Kontaktierbereich (42B) aufweist, welcher über einen weiteren Leiterplattenverbinder (30) mit dem zweiten Kontaktierbereich (42A) eines weiteren Erweiterungsmoduls (40) mechanisch und elektrisch verbindbar ist, so dass das Grundmodul (5), das mindestens eine Erweiterungsmodul (40) und mehrere Erweiterungsmodule (40) hintereinander anordenbar und elektrisch und mechanisch miteinander verbindbar sind.

2. Elektronikeinheit (1) nach Anspruch 1,
**dadurch gekennzeichnet,**
**dass** mindestens eine Erweiterungselektronik (50), welche eine steife Leiterplatte umfasst, über eine flexible Leiterfolie (52) und einen Steckverbinder (14, 24) mit dem Grundmodul (5) oder mit dem mindestens einen Erweiterungsmodul (20) elektrisch verbindbar ist.

3. Elektronikeinheit (1) nach einem der vorherigen Ansprüche,
**dadurch gekennzeichnet,**
**dass** die Auswerte- und Steuereinheit (10) das verbundene mindestens eine Erweiterungsmodul (40) und/oder die verbundene mindestens eine Erweiterungselektronik (50) erkennt und aktiviert.

4. Elektronikeinheit (1) nach einem der vorherigen Ansprüche,
**dadurch gekennzeichnet,**
**dass** die Kontaktierbereiche (22, 42A, 42B) des Grundmoduls und des mindestens einen Erweiterungsmoduls (40) jeweils mindestens eine Kontaktaufnahme (34) aufweisen.

5. Elektronikeinheit (1) nach einem der vorherigen Ansprüche,
**dadurch gekennzeichnet,**
**dass** der Leiterplattenverbinder (30) zwei Kontaktierbereiche (32A, 32B) aufweist, welche jeweils mindestens einen Kontaktpin (36) umfassen, wobei der mindestens eine Kontaktpin (36) eines vierten Kontaktierbereichs (32A) elektrisch mit dem mindestens einen Kontaktpin (36) eines fünften Kontaktbereichs (32B) verbunden ist.

6. Elektronikeinheit (1) nach Anspruch 4 und 5,
**dadurch gekennzeichnet,**
**dass** die Kontaktaufnahmen (34) des Grundmoduls (5) und des mindestens einen Erweiterungsmoduls (40) als Einpressöffnungen und die Kontaktpins (36) des Leiterplattenverbinders (30) als Einpresskontakte ausgebildet sind, wobei zwischen den als Einpressöffnungen ausgeführten Kontaktaufnahmen (34) und den als Einpresskontakte ausgebildeten Kontaktpins (36) ein Einpressverbindungsbereich (7) ausbildbar ist.

7. Elektronikeinheit (1) nach Anspruch 6,
**dadurch gekennzeichnet,**
**dass** ein als Einpresskontakt ausgebildeter erster Kontaktpin (36) des vierten Kontaktierbereichs (32A) in eine als Einpressöffnung ausgeführte erste Kontaktaufnahme (34) des ersten Kontaktierbereichs (22) eingepresst ist und elektrisch mit einem als Einpresskontakt ausgebildeten zweiten Kontaktpin (36) des fünften Kontaktierbereichs (32B) verbunden ist, wobei der als Einpresskontakt ausgebildete zweite Kontaktpin (36) des fünften Kontaktierbereichs (32B) in eine als Einpressöffnung ausgeführte zweite Kontaktaufnahme (34) des zweiten Kontaktierbereichs (42A) eingepresst ist, so dass die erste Kontaktaufnahme (34) des ersten Kontaktierbereichs (22) elektrisch mit der zweiten Kontaktaufnahme (34) des zweiten Kontaktierbereichs (42A) und eine Leiterplatte des Grundmoduls (5) mechanisch mit einer Leiterplatte des mindestens einen Erweiterungsmoduls (40) verbunden ist.

8. Elektronikeinheit (1) nach einem der vorherigen Ansprüche,
**dadurch gekennzeichnet,**
**dass** das mindestens eine Erweiterungsmodul (40) als Aufwärtswandler (40A) ausgebildet ist, welcher aus einer internen Gleichspannung eine höhere Versorgungsspannung für den elektrischen Antrieb (3) erzeugt.

9. Elektronikeinheit (1) nach einem der vorherigen Ansprüche,
**dadurch gekennzeichnet,**
**dass** das mindestens eine Erweiterungsmodul (40) als Busschnittstelle (40B, 40C) zur Vernetzung und Parametrisierung der elektrisch schaltbaren Zuhaltevorrichtung ausgeführt ist.

10. Elektronikeinheit (1) nach Anspruch 9,
**dadurch gekennzeichnet,**
**dass** die Busschnittstelle als CAN Busschnittstelle (40B) mit Bluetooth Modul ausgebildet ist, welches eine Aktivierung des Antriebs (3) über ein Fernsteuersignal ermöglicht.

11. Elektronikeinheit (1) nach Anspruch 9,
**dadurch gekennzeichnet,**
**dass** die Busschnittstelle als RS485 Busschnittstelle (40C) ausgebildet ist.

12. Elektronikeinheit (1) nach einem der Ansprüche 4 bis 11,
**dadurch gekennzeichnet,**
**dass** die mindestens eine Erweiterungselektronik (50) als Türzustandssensor (50A) ausgebildet ist, welcher den Öffnungszustand eines korrespondierenden Türflügels erkennt.

13. Elektronikeinheit (1) nach einem der Ansprüche 4 bis 11,
**dadurch gekennzeichnet,**
**dass** die mindestens eine Erweiterungselektronik (50) als Riegelpositionssensor (50B) ausgebildet ist, welcher erkennt, ob sich ein Riegel der elektrisch schaltbaren Zuhaltevorrichtung in seinem verriegelten oder seinem entriegelten Zustand befindet.

14. Elektronikeinheit (1) nach einem der Ansprüche 4 bis 11,
**dadurch gekennzeichnet,**
**dass** die mindestens eine Erweiterungselektronik (50) als Manipulationssensor (50C) ausgebildet ist, welcher eine Manipulation am Gehäuse der elektrisch schaltbaren Zuhaltevorrichtung erkennt.

15. Elektronikeinheit (1) nach einem der Ansprüche 4 bis 11,
**dadurch gekennzeichnet,**
**dass** die mindestens eine Erweiterungselektronik (50) als Zeitgeber (50D) ausgebildet ist, welcher eine einstellbare Verzögerungszeitspanne zwischen einem Entriegelungswunsch und einer Ausgabe des Entriegelungssignals von der Auswerte- und Steuereinheit (10) an den Antrieb (3) vorgibt.

## Claims

1. Electronic unit (1) for an electrically switchable closing device, comprising an evaluation and control unit (10) and a power supply (20) for supplying the evaluation and control unit (10) and an electrical drive (3) of the electrically switchable closing device, the electronic unit (1) being of modular construction and comprising a basic module (5) and also at least one extension module (40),
**characterized**
**in that** the evaluation and control unit (10) and the power supply (20) form the basic module (5) having a first contacting region (22), said basic module being extendable with the at least one extension module (40) having a second contacting region (42A), wherein the first contacting region (22) of the basic module (5) and the second contacting region (42A) of the at least one extension module (40) are mechanically and electrically connected to one another via a printed circuit board connector (30), and wherein the at least one extension module (40) has a third contacting region (42B), which is mechanically and electrically connectable to the second contacting region (42A) of a further extension module (40) via a further printed circuit board connector (30), such that the basic module (5), the at least one extension module (40) and a plurality of extension modules (40) are arrangeable one behind another and electrically and mechanically connectable to one another.

2. Electronic unit (1) according to Claim 1,
**characterized**
**in that** at least one extension electronic assembly (50) comprising a stiff printed circuit board is electrically connectable to the basic module (5) or to the at least one extension module (20) via a flexible conductor film (52) and a plug connector (14, 24).

3. Electronic unit (1) according to either of the preceding claims,
**characterized**
**in that** the evaluation and control unit (10) recognizes and activates the at least one extension module (40) connected and/or the at least one extension electronic assembly (50) connected.

4. Electronic unit (1) according to any of the preceding claims,
**characterized**
**in that** the contacting regions (22, 42A, 42B) of the basic module and of the at least one extension module (40) each have at least one contact receptacle (34).

5. Electronic unit (1) according to any of the preceding claims,
**characterized**
**in that** the printed circuit board connector (30) has two contacting regions (32A, 32B), each comprising at least one contact pin (36), wherein the at least one contact pin (36) of a fourth contacting region (32A) is electrically connected to the at least one contact pin (36) of a fifth contacting region (32B).

6. Electronic unit (1) according to Claims 4 and 5,
**characterized**
**in that** the contact receptacles (34) of the basic module (5) and of the at least one extension module (40) are embodied as press-fit openings and the contact pins (36) of the printed circuit board connector (30) are embodied as press-fit contacts, a press-fit connection region (7) being able to be formed between the contact receptacles (34) embodied as press-fit openings and the contact pins (36) embodied as press-fit contacts.

7. Electronic unit (1) according to Claim 6,
**characterized**
**in that** a first contact pin (36) embodied as a press-fit contact of the fourth contacting region (32A) is press-fitted into a first contact receptacle (34) embodied as press-fit opening of the first contacting region (22) and is electrically connected to a second contact pin (36) embodied as press-fit contact of the fifth contacting region (32B), wherein the second contact pin (36) embodied as press-fit contact of the fifth contacting region (32B) is press-fitted into a second contact receptacle (34) embodied as press-fit opening of the second contacting region (42A), such that the first contact receptacle (34) of the first contacting region (22) is electrically connected to the second contact receptacle (34) of the second contacting region (42A) and a printed circuit board of the basic module (5) is mechanically connected to a printed circuit board of the at least one extension module (40).

8. Electronic unit (1) according to any of the preceding claims,
**characterized**
**in that** the at least one extension module (40) is embodied as a boost converter (40A), which generates, from an internal DC voltage, a higher supply voltage for the electrical drive (3).

9. Electronic unit (1) according to any of the preceding claims,
**characterized**
**in that** the at least one extension module (40) is embodied as a bus interface (40B, 40C) for networking and parametrization of the electrically switchable closing device.

10. Electronic unit (1) according to Claim 9,
**characterized**
**in that** the bus interface is embodied as a CAN bus interface (40B) with a Bluetooth module enabling the drive (3) to be activated by way of a remote control signal.

11. Electronic unit (1) according to Claim 9,
**characterized**
**in that** the bus interface is embodied as an RS485 bus interface (40C).

12. Electronic unit (1) according to any of Claims 4 to 11,
**characterized**
**in that** the at least one extension electronic assembly (50) is embodied as a door state sensor (50A), which recognizes the opening state of a corresponding door leaf.

13. Electronic unit (1) according to any of Claims 4 to 11,
**characterized**
**in that** the at least one extension electronic assembly (50) is embodied as a bolt position sensor (50B), which recognizes whether a bolt of the electrically switchable closing device is in its locked state or its unlocked state.

14. Electronic unit (1) according to any of Claims 4 to 11,
**characterized**
**in that** the at least one extension electronic assembly (50) is embodied as a manipulation sensor (50C), which recognizes a manipulation on the housing of the electrically switchable closing device.

15. Electronic unit (1) according to any of Claims 4 to 11,
**characterized**
**in that** the at least one extension electronic assembly (50) is embodied as a timer (50D), which predefines an adjustable delay time period between a desire for unlocking and an outputting of the unlocking signal from the evaluation and control unit (10) to the drive (3).

## Revendications

1. Unité électronique (1) pour un dispositif de maintien en position fermée commutable électriquement, comprenant une unité d'interprétation et de commande (10) et une source d'énergie (20) destinée à l'alimentation de l'unité d'interprétation et de commande (10) et un mécanisme d'entraînement électrique (3) du dispositif de maintien en position fermée commutable électriquement, l'unité électronique (1) étant de construction modulaire et comportant un module de base (5) ainsi qu'au moins un module d'extension (40),
**caractérisée en ce que**
l'unité d'interprétation et de commande (10) et la source d'énergie (20) formant le module de base (5) avec une première zone de mise en contact (22), laquelle peut être étendue par l'au moins un module d'extension (40) avec une deuxième zone de mise en contact (42A), la première zone de mise en contact (22) du module de base (5) et la deuxième zone de mise en contact (42A) de l'au moins un module d'extension (40) étant reliées mécaniquement et électriquement l'une à l'autre par le biais d'un connecteur pour circuit imprimé (30), et l'au moins un module d'extension (40) possédant une troisième zone de mise en contact (42B), laquelle peut être reliée mécaniquement et électriquement à la deuxième zone de mise en contact (42A) d'un module d'extension (40) supplémentaire par le biais d'un connecteur pour circuit imprimé (30) supplémentaire, de sorte que le module de base (5), l'au moins un module d'extension (40) et plusieurs modules d'extension (40) peuvent être disposés les uns derrière les autres et peuvent être reliés mécaniquement et électriquement les uns aux autres.

2. Unité électronique (1) selon la revendication 1, **caractérisée en ce qu'**au moins une électronique d'extension (50), laquelle comporte un circuit imprimé rigide, peut être reliée électriquement au module de base (5) ou à l'au moins un module d'extension (40) par le biais d'un film conducteur souple (52) et d'un connecteur à enfichage (14, 24).

3. Unité électronique (1) selon l'une des revendications précédentes, **caractérisée en ce que** l'unité d'interprétation et de commande (10) reconnaît et active l'au moins un module d'extension (40) connecté et/ou l'au moins une électronique d'extension (50) connectée.

4. Unité électronique (1) selon l'une des revendications précédentes, **caractérisée en ce que** les zones de mise en contact (22, 42A, 42B) du module de base et de l'au moins un module d'extension (40) possèdent respectivement au moins un logement de contact (34).

5. Unité électronique (1) selon l'une des revendications précédentes, **caractérisée en ce que** le connecteur pour circuit imprimé (30) possède deux zones de mise en contact (32A, 32B), lesquelles comportent respectivement au moins une broche de contact (36), l'au moins une broche de contact (36) d'une quatrième zone de mise en contact (32A) étant reliée électriquement à l'au moins une broche de contact (36) d'une cinquième zone de mise en contact (32B).

6. Unité électronique (1) selon les revendications 4 et 5, **caractérisée en ce que** les logements de contact (34) du module de base (5) et de l'au moins un module d'extension (40) sont réalisés sous la forme d'ouvertures d'enfoncement et les broches de contact (36) du connecteur pour circuit imprimé (30) sous la forme de contacts à enfoncement, une zone de connexion par enfoncement (7) pouvant être formée entre les logements de contact (34) réalisés sous la forme d'ouvertures d'enfoncement et les broches de contact (36) réalisées sous la forme de contacts à enfoncement.

7. Unité électronique (1) selon la revendication 6, **caractérisée en ce qu'**une première broche de contact (36) réalisée sous la forme d'un contact à enfoncement de la quatrième zone de contact (32A) est enfoncée dans un premier logement de contact (34) réalisé sous la forme d'une ouverture d'enfoncement de la première zone de mise en contact (22) et est reliée électriquement à une deuxième broche de contact (36) réalisée sous la forme d'un contact à enfoncement de la cinquième zone de contact (32B), deuxième broche de contact (36) réalisée sous la forme d'un contact à enfoncement de la cinquième zone de contact (32B) étant enfoncée dans un deuxième logement de contact (34) réalisé sous la forme d'une ouverture d'enfoncement de la deuxième zone de mise en contact (42A), de sorte que le premier logement de contact (34) de la première zone de mise en contact (22) est relié électriquement au deuxième logement de contact (34) de la deuxième zone de mise en contact (42A) et un circuit imprimé du module de base (5) est relié mécaniquement à un circuit imprimé de l'au moins un module d'extension (40).

8. Unité électronique (1) selon l'une des revendications précédentes, **caractérisée en ce que** l'au moins un module d'extension (40) est réalisé sous la forme d'un convertisseur élévateur (40A) qui génère, à partir d'une tension continue interne, une tension d'alimentation plus élevée pour le mécanisme d'entraînement électrique (3).

9. Unité électronique (1) selon l'une des revendications précédentes, **caractérisée en ce que** l'au moins un module d'extension (40) est réalisé sous la forme d'une interface de bus (40B, 40C) destinée à la mise en réseau et au paramétrage du dispositif de maintien en position fermée commutable électriquement.

10. Unité électronique (1) selon la revendication 9, **caractérisée en ce que** l'interface de bus est réalisée sous la forme d'une interface de bus CAN (40B) avec module Bluetooth, laquelle permet une activation du mécanisme d'entraînement (3) par le biais d'un signal de commande à distance.

11. Unité électronique (1) selon la revendication 9, **caractérisée en ce que** l'interface de bus est réalisée sous la forme d'une interface de bus RS485 (40C).

12. Unité électronique (1) selon l'une des revendications 4 à 11, **caractérisée en ce que** l'au moins une électronique d'extension (50) est réalisée sous la forme d'un capteur d'état de porte (50A), lequel reconnaît l'état d'ouverture d'un vantail de porte correspondant.

13. Unité électronique (1) selon l'une des revendications 4 à 11, **caractérisée en ce que** l'au moins une électronique d'extension (50) est réalisée sous la forme d'un capteur de position de pêne (50B), lequel reconnaît si un pêne du dispositif de maintien en position fermée commutable électriquement se trouve dans son état verrouillé ou son état déverrouillé.

14. Unité électronique (1) selon l'une des revendications 4 à 11, **caractérisée en ce que** l'au moins une électronique d'extension (50) est réalisée sous la forme d'un capteur de manipulation (50C), lequel reconnaît une manipulation au niveau du boîtier du dispositif de maintien en position fermée commutable électriquement.

15. Unité électronique (1) selon l'une des revendications 4 à 11, **caractérisée en ce que** l'au moins une électronique d'extension (50) est réalisée sous la forme d'un transmetteur de temps (50D), lequel prédéfinit un intervalle de temps de retard réglable entre un souhait de déverrouillage et une délivrance du signal de déverrouillage par l'unité d'interprétation et de commande (10) au mécanisme d'entraînement (3).
